# EUROPÄISCHE PATENTSCHRIFT

(11) **EP 2 812 199 B1**
(45) Veröffentlichungstag und Bekanntmachung des Hinweises auf die Patenterteilung: **06.05.2020**
(21) Anmeldenummer: 13701973.3
(22) Anmeldetag: 23.01.2013
(51) Int. Cl.: B60G 11/28

(54) **LUFTFEDERBEFESTIGUNG**
AIR SPRING FASTENING
FIXATION DE SUSPENSION PNEUMATIQUE

(30) Priorität: 07.02.2012 DE 102012201745
(43) Veröffentlichungstag der Anmeldung: 17.12.2014
(73) Patentinhaber: SAF-HOLLAND GmbH, 63856 Bessenbach (DE)
(72) Erfinder: HOCK, Helmut, 63856 Bessenbach (DE)
(74) Vertreter: Müller Schupfner & Partner Patent- und Rechtsanwaltspartnerschaft mbB
(86) Internationale Anmeldenummer: PCT/EP2013/051191
(87) Internationale Veröffentlichungsnummer: WO 2013/117429

(56) Entgegenhaltungen:
- EP-A1- 0 864 453
- EP-A1- 2 363 308
- EP-A2- 0 830 959
- EP-A2- 1 300 264
- WO-A1-2010/095924
- WO-A2-2009/148812
- DE-A1- 4 213 676
- DE-B3- 10 231 376

## Beschreibung

Die vorliegende Erfindung betrifft eine Luftfederbefestigung, insbesondere zum Einsatz in Nutzfahrzeugen.

Die Befestigung einer Luftfeder bzw. eines Luftfederbalges zwischen dem Fahrzeugrahmen eines Nutzfahrzeuges und einem verlagerbar zu diesem angeordneten Führungslenker ist hinlänglich bekannt. Es ist dabei ein erster Abschnitt der Luftfeder am Fahrzeugrahmen des Nutzfahrzeuges festlegbar und ein relativ zum ersten Abschnitt verlagerbarer zweiter Abschnitt der Luftfeder an der Führungslenkereinheit beispielsweise mittels einer Schraube befestigt. Für den Fall, dass an einem Rahmen mit bestimmter geometrischer Konfiguration verschiedene Luftfedern zum Einsatz kommen sollen, ergeben sich Probleme bei der genauen Positionierung der Luftfeder am Rahmen und an der Führungslenkereinheit. In der Folge müssen, falls verschiedene Luftfedern an ein und demselben Nutzfahrzeug Verwendung finden sollen, die Führungslenkereinheit und die Schnittstelle am Rahmen jeweils spezifisch ausgebildet sein, wobei der Herstellungsaufwand erheblich steigt.

Die DE 42 13 676 A1 betrifft eine Luftfeder für Fahrzeuge mit einem elastomeren Rollbalg und einem Abrollkolben, welcher an einem abzufedernden Fahrzeugteil mittels einer Befestigung nach dem Oberbegriff des Anspruchs 1 lösbar befestigt ist.

Die EP 0 864 453 A1 betrifft eine Luftfeder mit einem fahrgestellfesten Deckel und einem auf einem rückwärtigen Ende eines Längslenkers mittels einer Befestigung nach dem Oberbegriff des Anspruchs 1 festgelegten Tauchkolben sowie einem zwischen Deckel und Tauchkolben angeordneten Rollbalg.

Aufgabe der vorliegenden Erfindung ist es eine Luftfederbefestigung bereitzustellen, mittels welcher die Luftfeder relativ zu der Führungslenkereinheit und/oder zum Rahmen des Nutzfahrzeuges positioniert werden kann, um auf diese Weise verschiedene Luftfedern an ein und derselben Führungslenkereinheit bzw. dem Rahmen eines Nutzfahrzeuges festlegen zu können.

Diese Aufgabe wird gelöst mit einer Luftfederbefestigung mit den Merkmalen von Anspruch 1. Weitere Vorteile und Merkmale der Erfindung ergeben sich aus den abhängigen Ansprüchen.

Erfindungsgemäß umfasst die Luftfederbefestigung ein Positionierelement, eine Führungslenkereinheit und eine Luftfedereinheit, wobei die Führungslenkereinheit und die Luftfedereinheit je einen Befestigungsabschnitt aufweisen, wobei das Positionierelement einen ersten Eingriffsabschnitt aufweist, welcher mit einem ersten Befestigungsabschnitt in Eingriff bringbar ist, um das Positionierelement gegen Verlagerung in einer Positionierebene relativ zum ersten Befestigungsabschnitt zu sichern, wobei das Positionierelement zumindest einen zweiten Eingriffsabschnitt aufweist, welcher sich quer zur Positionierebene erstreckt und außermittig bezogen auf die Positionierebene am Positionierelement angeordnet ist, wobei ein zweiter Befestigungsabschnitt quer zur Positionierebene fluchtend mit dem zweiten Eingriffsabschnitt durch zumindest ein Befestigungsmittel festlegbar ist, um durch Festlegung des Positionierelements in einer bestimmten Verdrehposition relativ zum ersten Befestigungsabschnitt den zweiten Befestigungsabschnitt in einer bestimmten Einbauposition bezogen auf den ersten Befestigungsabschnitt festzulegen. Das Positionierelement ist bevorzugt ein plattenförmig ausgebildeter Körper, welcher sich in seiner Einbauposition, d. h. der Position, in welcher er die Führungslenkereinheit und die Luftfeder verbindet im Wesentlichen entlang einer Positionierebene erstreckt. Bevorzugt an seinen Rändern, d. h. den begrenzenden Flächen mit der geringsten Erstreckung bzw. mit einer Erstreckung quer zur Positionierebene weist das Positionierelement einen ersten Eingriffsabschnitt auf. Die Führungslenkereinheit ist insbesondere bevorzugt der Führungslenker eines Nutzfahrzeuges. Üblicherweise ist ein solcher Führungslenker schwenkbar um ein erstes Ende am Fahrzeugrahmen festgelegt und weist an einem zweiten Ende einen Eingriffsbereich auf, an welchem eine Luftfedereinheit mittelbar oder unmittelbar festlegbar ist. Insbesondere bevorzugt ist die Führungslenkereinheit im Bereich des Eingriffsbereiches flach oder ausgewalzt bzw. im Wesentlichen plattenförmig ausgebildet. Besonders bevorzugt umfasst die Führungslenkereinheit einen beispielsweise plattenförmig ausgebildeten Befestigungsflansch, welcher an einer ersten Seite über Befestigungsmittel an dem Führungslenker und/oder der Achse des Nutzfahrzeuges festgelegt ist und an dessen zweite Seite die Luftfedereinheit gelagert und festgelegt ist. Die Luftfedereinheit ist insbesondere bevorzugt die Luftfeder eines Nutzfahrzeuges, wobei sie zumindest zwei relativ zueinander bewegliche Baugruppen, insbesondere bevorzugt einen Tauchkolben und eine Deckelplatte aufweist, zwischen denen ein elastisch verformbarer und mit Druckluft gefüllter Luftfederbalg angeordnet ist. Im Sinne der vorliegenden Erfindung soll insbesondere Bezug auf den Tauchkolben bzw. die Deckelplatte der Luftfedereinheit genommen werden, da eins dieser beiden Bauteile jeweils an der Führungslenkereinheit und das jeweils andere am Rahmen des Nutzfahrzeuges über ein erfindungsgemäßes Positionierelement festlegbar ist. Erfindungsgemäß ist ein erster Befestigungsabschnitt vorgesehen, welcher mit dem ersten Eingriffsabschnitt, bevorzugt also mit der Außengeometrie des Positionierelements, in Eingriff bringbar ist und das Positionierelement formschlüssig zumindest gegen Verlagerung in der Positionierebene und gegen Verdrehung relativ zum ersten Befestigungsabschnitt sichert. Dabei kann der erste Befestigungsabschnitt entweder an dem Führungslenker oder an der Luftfedereinheit vorgesehen sein, wobei die jeweils andere Baugruppe, also Luftfedereinheit oder Führungslenkereinheit, einen zweiten Befestigungsabschnitt aufweist. Der zweite Befestigungsabschnitt ist insbesondere bevorzugt dazu ausgelegt mittelbar oder unmittelbar mit einem zweiten Eingriffsabschnitt am Positionierelement in Eingriff zu gelangen. Der zweite Eingriffsabschnitt des Positionierelements erstreckt sich erfindungsgemäß quer zur Positionierebene und ist außermittig relativ zum Flächenschwerpunkt der Erstreckung des Positionierelements in der Positionierebene, am Positionierelement angeordnet. Die außermittige Anordnung kann auch bedeuten, dass der zweite Eingriffsabschnitt außerhalb des Mittelpunkts eines gedachten Innen-, bzw. Außenkreises der Erstreckung des Positionierelements in der Positionierebene angeordnet ist. Um die Luftfedereinheit in einer bestimmten Position relativ zu der Führungslenkereinheit festzulegen, wird der mit einer der beiden Einheiten fest verbundene zweite Befestigungsabschnitt in eine Position bzw. Stellung gebracht, in welcher er unmittelbar, d. h. direkt mit dem zweiten Eingriffsabschnitt in Eingriff gelangen kann oder über ein zusätzlich vorgesehenes Befestigungsmittel relativ zum zweiten Eingriffsabschnitt festgelegt ist. Insbesondere ist die Haupterstreckungsrichtung des zweiten Befestigungsabschnitts quer zur Positionierebene in fluchtender, bzw. koaxialer Stellung relativ zum zweiten Eingriffsabschnitt des Positionierelements ausgerichtet. Aufgrund der außermittigen Anordnung des zweiten Eingriffsabschnitts am Positionierelement kann durch Einstellung einer bestimmten Verdrehposition des Positionierelements in der Positionierebene die Lage des zweiten Eingriffsabschnitts relativ zum ersten Befestigungsabschnitt verändert bzw. eingestellt werden. Zweckmäßigerweise ist der erste Befestigungsabschnitt eine an der Führungslenkereinheit vorgesehene Aussparung und der zweite Befestigungsabschnitt ein bevorzugt an der Luftfedereinheit vorgesehener Rücksprung oder Vorsprung, wobei in diesem Fall der erste Eingriffsabschnitt des Positionierelements formschlüssig mit dem Führungslenker verbindbar ist und der zweite Eingriffsabschnitt des Positionierelements insbesondere in formschlüssigen Eingriff mit der Luftfedereinheit gelangt. Alternativ und in gleicher Weise bevorzugt kann der erste Befestigungsabschnitt auch an der Luftfedereinheit vorgesehen sein und der zweite Befestigungsabschnitt eine Aussparung oder ein Vorsprung an der Führungslenkereinheit sein. Bevorzugt sind die Geometrien des ersten Eingriffsabschnitts und des ersten Befestigungsabschnitts derart ausgelegt, dass diese größtenteils miteinander korrespondieren, d. h. dass sie, abgesehen von Fertigungstoleranzen, im Wesentlichen aufeinanderliegend platzierbar sind.

Vorzugsweise ist der erste Eingriffsabschnitt des Positionierelements in dem Bereich des Positionierelements angeordnet, welcher eine größere Erstreckung längs der, bzw. parallel zur Positionierebene aufweist als der Bereich, in welchem der zweite Eingriffsabschnitt angeordnet ist. Auf diese Weise kann das Positionierelement dank eines bei geringen Kräften ausreichend hohen Drehmoments gegen Verdrehung in der Positionierebene relativ zum ersten Befestigungsabschnitt gesichert werden. Weiterhin bevorzugt greift der erste Eingriffsabschnitt unmittelbar, d.h. ohne weitere Zwischenelemente, im ersten Befestigungsabschnitt ein.

Bevorzugt ist hierdurch der Montageaufwand für die Luftfederbefestigung geringer, da eine geringere Anzahl an Bauteilen zur Festlegung der Luftfedereinheit an der Führungslenkereinheit nötig ist.

In einer bevorzugten Ausführungsform ist der zweite Eingriffsabschnitt um einen Abstand von dem Flächenschwerpunkt der Erstreckung des Positionierelements in der Positionierebene beabstandet angeordnet. Die Erstreckung des Positionierelements ist dabei mit anderen Worten bevorzugt die Fläche des Positionierelements parallel oder längs der Positionierebene und der Flächenschwerpunkt dieser Fläche bzw. dieser Erstreckung ist insbesondere bevorzugt der Mittelpunkt eines gedachten Innenkreises dieser Fläche. Über den Abstand des zweiten Eingriffsabschnitts zum Flächenschwerpunkt der Erstreckung des Positionierelements definiert sich auch der mögliche Einstellspielraum bzw. der mögliche maximale Abstand zwischen den möglichen Einbaupositionen der Führungslenkereinheit relativ zur Luftfedereinheit. So ist der maximale Abstand zweier Einbaupositionen voneinander bzw. der maximale Versatz zwischen zwei Einbaupositionen, das Doppelte des Abstands des zweiten Eingriffsabschnitts von dem Flächenschwerpunkt.

In einer alternativ bevorzugten Ausführungsform erstreckt sich der erste Eingriffsabschnitt im Wesentlichen kreisförmig in der Positionierebene und weist zumindest einen Vorsprung entlang der Positionierebene auf, welcher mit einem korrespondierenden Rücksprung, an dem sich im Wesentlichen kreisförmig in der Positionierebene erstreckenden ersten Befestigungsabschnitts in Eingriff bringbar ist.

Der Vorsprung am ersten Eingriffsabschnitt kann dabei vorzugsweise als abgerundete Nase oder nicht erfindungsgemäß als rechteckige oder dreieckige Nase ausgebildet sein, wobei dieser Vorsprung in einem dazu im Wesentlichen korrespondierenden Rücksprung am ersten Befestigungsabschnitt in Eingriff bringbar ist. Abgesehen von dem Vorsprung können die Außengeometrie des ersten Eingriffsabschnitts und damit die Außengeometrie des Positionierelements im Wesentlichen kreisförmig sein. Zum ersten Eingriffsabschnitt korrespondierend, weist der erste Befestigungsabschnitt eine im Wesentlichen kreisförmige Geometrie auf mit einem Rücksprung auf, wobei wenn der erste Eingriffsabschnitt und der erste Befestigungsabschnitt in Eingriff stehen, der erste Eingriffsabschnitt formschlüssig gegen Verlagerung und Verdrehung in der Positionierebene relativ zum ersten Befestigungsabschnitt gesichert ist. Insbesondere bevorzugt kann es sein, dass der erste Befestigungsabschnitt eine Vielzahl von Rücksprüngen aufweist, von denen in je einen der Vorsprünge des ersten Eingriffsabschnitts in Eingriff bringbar ist. Es kann auf diese Weise eine Vielzahl von möglichen Verdrehpositionen des Eingriffsabschnitts relativ zum ersten Befestigungsabschnitt eingestellt werden.

In einer besonders bevorzugten Ausführungsform ist der zweite Eingriffsabschnitt eine Aussparung, in welche der zweite Befestigungsabschnitt oder ein Eingriffsmittel eingreift. Besonders bevorzugt ist der am Positionierelement vorgesehene zweite Eingriffsabschnitt als Bohrung ausgeführt. In diese Aussparung bzw. Bohrung kann ein als Vorsprung ausgebildeter zweiter Befestigungsabschnitt oder ein Eingriffsmittel eingreifen, wobei bei ersterer Ausführungsform der zweite Befestigungsabschnitt unmittelbar an dem zweiten Eingriffsabschnitt festgelegt ist und in der zweiten Ausführungsform der zweite Befestigungsabschnitt nur mittelbar über das Eingriffsmittel am zweiten Eingriffsabschnitt festgelegt ist. Besonders bevorzugt kann der zweite Eingriffsabschnitt ein Innengewinde aufweisen, in welches ein Eingriffsmittel eingreift, um das Positionierelement relativ zu der Führungslenkereinheit und zur Luftfedereinheit festzulegen.

Bevorzugt ist das Positionierelement in sowohl in der Positionierebene als auch quer zur Positionierebene verdrehter Einbaulage am ersten Befestigungsabschnitt festlegbar. Eine Verdrehung oder Verlagerung in der Positionierebene kann dabei insbesondere auch in einer parallel zur Positionierebene liegenden Ebene stattfinden. Mit anderen Worten bedeutet dies, dass die Einbaulage des Positionierelements relativ zum ersten Befestigungsabschnitt sowohl durch Drehung in der Positionierebene als auch durch Drehung, bzw. Schwenken quer zur Positionierebene, bevorzugt um 180°, einstellbar ist. Auf diese Weise kann, wie zuvor beschrieben, die Anzahl der möglichen Einbaupositionen der Führungslenkereinheit relativ zur Luftfedereinheit erhöht werden.

Insbesondere bevorzugt kann es sein, den zweiten Eingriffsabschnitt als ein einstückig mit dem Positionierelement ausgebildeten Gewindebolzen auszulegen. Mit dem Ziel die Anzahl der zu montierenden Bauteile zu reduzieren, ist es bevorzugt, dass der zweite Eingriffsabschnitt als Gewindebolzen ausgelegt ist, welcher bereits während des Gießens oder nach Anschweißen stoffschlüssig mit dem Positionierelement verbunden ist. Nach Einführung des Gewindebolzens in den zweiten Befestigungsabschnitt ist lediglich eine Mutter auf den Gewindebolzen aufzuschrauben, um das Positionierelement am jeweiligen gegenüberliegenden Element festzulegen.

In einer besonders bevorzugten Ausführungsform ist der erste Befestigungsabschnitt eine Aussparung quer zur Positionierebene an der Luftfedereinheit, wobei der zweite Befestigungsabschnitt an dem Führungslenker vorgesehen ist. Es ist insbesondere bevorzugt beispielsweise am Boden eines Tauchkolbens einer Luftfeder oder am Deckel einer Luftfeder, eine entsprechende Aussparung vorzusehen, in welche das Positionierelement formschlüssig eingreift. Bei dieser bevorzugten Ausführungsform ist an der Führungslenkereinheit ein entsprechender zweiter Befestigungsabschnitt, welcher bevorzugt als Vorsprung, beispielsweise als Gewindestab, oder als Rücksprung, also beispielsweise als Bohrung oder Aussparung, ausgelegt sein kann, vorgesehen. Alternativ hierzu kann der erste Befestigungsabschnitt auch an dem Führungslenker vorgesehen sein, wobei der zweite Befestigungsabschnitt entsprechend an einem der unbeweglich zu der Führungslenkereinheit stehenden Bauteile der Luftfedereinheit vorzusehen ist.

Erfindungsgemäß weist der erste Befestigungsabschnitt einen Anschlagkragen auf, gegen den das Positionierelement über das Befestigungsmittel pressbar ist, um die Luftfedereinheit kraftschlüssig an dem Führungslenker festzulegen. Insbesondere um die formschlüssige Verbindung der Luftfedereinheit über das Positionierelement und die beiden Befestigungsabschnitte bzw. die beiden Eingriffsabschnitte an dem Führungslenker durch einen Kraftschluss zu unterstützen, kann es bevorzugt sein, einen Anschlagkragen am ersten Befestigungsabschnitt vorzusehen, gegen welchen das Positionierelement mit seinem ersten Eingriffsabschnitt pressbar ist, um auf diese Weise die Luftfedereinheit gegen die Führungslenkereinheit zu pressen.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne Merkmale der verschiedenen Ausführungsformen im Rahmen der Erfindung miteinander kombiniert werden können. Es zeigen:
- Fig. 1: eine erste Schnittansicht einer bevorzugten Ausführungsform der erfindungsgemäßen Luftfederbefestigung;
- Fig. 2: eine Schnittansicht einer zweiten bevorzugten Ausführungsform der erfindungsgemäßen Luftfederbefestigung;
- Fig. 3: eine Ansicht eines nicht erfindungsgemäßen Positionierelements;
- Fig. 4a) - c): Ansichten verschiedener nicht erfindungsgemäßen Ausführungsformen des Positionierelements, insbesondere des ersten Eingriffsabschnitts 21.

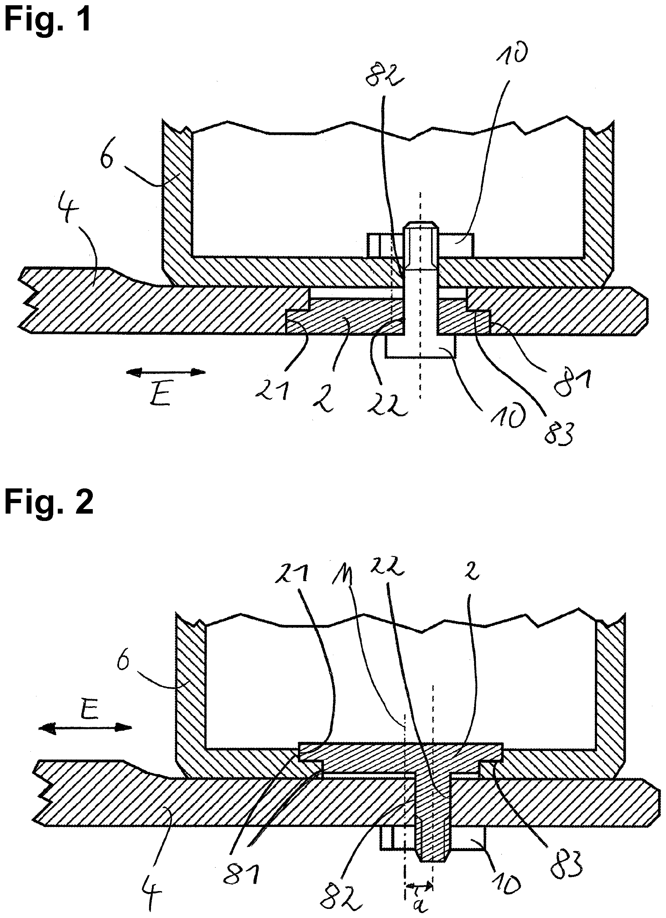

Bei der in **Fig. 1** gezeigten Ausführungsform der erfindungsgemäßen Luftfederbefestigung ist eine Luftfedereinheit 6 auf eine Führungslenkereinheit 4 aufgesetzt und mittels eines Positionierelements 2 und eines Befestigungsmittels 10 an der Führungslenkereinheit 4 festgelegt. Die Luftfedereinheit 6 ist bevorzugt der Tauchkolben einer Luftfeder eines Nutzfahrzeuges. In den Boden des Tauchkolbens, bzw. dessen im Wesentlichen parallel zur Positionierebene E stehende Fläche, ist ein zweiter Befestigungsabschnitt 82 eingebracht ist, welcher als Aussparung bzw. Bohrung ausgeführt ist. Die Führungslenkereinheit 4 weist eine im Wesentlichen quer zur Positionierebene E eingebrachte Aussparung, den ersten Befestigungsabschnitt 81 auf, in den ein erster Eingriffsabschnitt 21 des Positionierelements 2 zumindest bereichsweise formschlüssig eingreift. Der erste Befestigungsabschnitt 81 weist zudem einen Anschlagkragen 83 auf, an welchem sich der erste Eingriffsabschnitt 21 des Positionierelements 2 gegen Verlagerung quer zur Positionierebene E abstützt. Der erste Eingriffsabschnitt 21 kann, anders als in der Figur gezeigt, auch eine stufenlose Außengeometrie aufweisen, wobei das Positionierelement 2 sowohl mit seiner Ober- als auch mit seiner Unterseite auf den Anschlagkragen 83 aufgesetzt, bzw. -gelegt werden kann. Das Positionierelement 2 weist weiterhin einen zweiten Eingriffsabschnitt 22 auf, zu welchem im Wesentlichen fluchtend, bzw. koaxial, der zweite Befestigungsabschnitt 82 der Luftfedereinheit 6 ausgerichtet ist. In den zweiten Befestigungsabschnitt 82 und den zweiten Eingriffsabschnitt 22 ist ein Befestigungsmittel 10 eingeführt, welches bevorzugt als Schraube oder Bolzen mit einer Hinterschneidung ausgebildet ist und in ein zweites Befestigungsmittel 10, beispielsweise einer Mutter, eingreift um die Luftfedereinheit 6 gegen die Führungslenkereinheit 4 zu pressen. Dabei ist es bevorzugt, dass die Dicke des Positionierelements 2, in der Figur oberhalb des Kragens 83 gezeigt, quer zur Positionierebene E geringer ist als die Dicke der Führungslenkereinheit 4 in diesem Bereich, um eine Vorspannung der Luftfedereinheit 6 gegen die Führungslenkereinheit 4 mittelbar über das Positionierelement 2 und die Befestigungsmittel 10 zu ermöglichen.

**Fig. 2** zeigt eine alternative Ausführungsform der erfindungsgemäßen Luftfederbefestigung, wobei der erste Befestigungsabschnitt 81 an der Luftfedereinheit 6 vorgesehen ist und wobei der zweite Befestigungsabschnitt 82 bevorzugt an der Führungslenkereinheit 4 vorgesehen ist. Dabei ist das Positionierelement 2 bevorzugt von oben in den Tauchkolben der Luftfedereinheit 6 einführbar, wobei sein erster Eingriffsabschnitt 21 mit dem an der Luftfedereinheit 6 vorgesehenen ersten Befestigungsabschnitt 81 in formschlüssigen Eingriff gelangt. Der am Positionierelement 2 vorgesehene zweite Eingriffsabschnitt 22 ist bevorzugt als Gewindebolzen ausgeführt, welcher mit einem Abstand a vom Flächenschwerpunkt M der parallel zur Positionierebene E liegenden Erstreckung des Positionierelements 2 angeordnet ist und insbesondere bevorzugt einstückig mit dem Positionierelement 2 ausgebildet ist, um mit einem zweiten Befestigungsmittel 10 in form- und kraftschlüssigen Eingriff zu gelangen und auf diese Weise die Luftfedereinheit 6 über das Positionierelement 2 an der Führungslenkereinheit 4 festzulegen. Es versteht sich, dass diese einstückige Ausführung des Gewindebolzens mit dem Positionierelement 2 gleichfalls bei der in Fig. 1 gezeigten Anordnung des ersten und des zweiten Befestigungsabschnitts 81, 82 zum Einsatz kommen kann. Ebenso kann für die in Fig. 2 gezeigte Anordnung des ersten und des zweiten Befestigungsabschnitts 81, 82 ein separates, als Schraube oder Bolzen ausgebildetes Befestigungsmittel 10 zum Einsatz kommen.

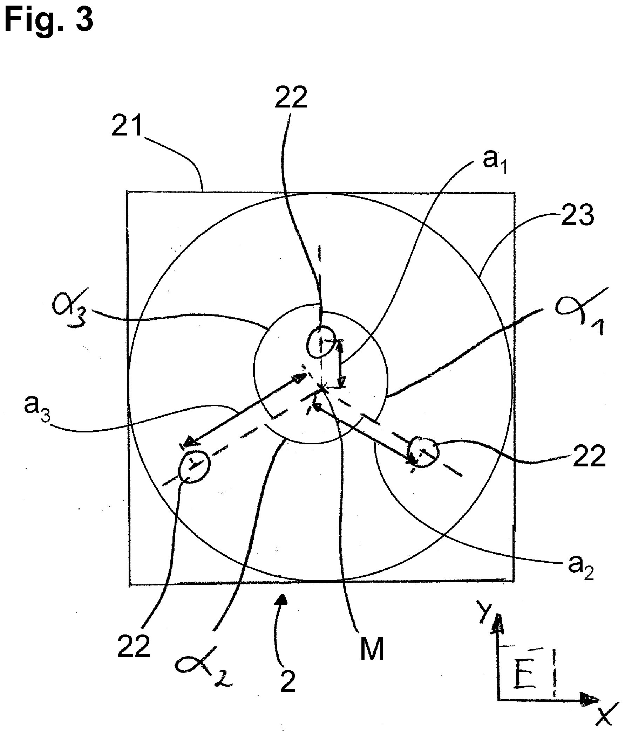

**Fig. 3** zeigt eine bevorzugt quadratisch ausgebildete Ausführungsform des ersten Eingriffsabschnitts 21 des Positionierelements 2, wobei drei zweite Eingriffsabschnitte 22 am Positionierelement vorgesehen sind, welche mit jeweils verschiedenen Abständen a₁...a₃ vom Mittelpunkt M des Innenkreises 23 des Quadrats bzw. vom Flächenschwerpunkt der Schnittfläche des Positionierelements 2 in der Positionierebene E angeordnet sind. Weiterhin sind die gezeigten drei zweiten Eingriffsabschnitte jeweils um Winkel a, bezogen auf den Flächenschwerpunkt M voneinander beabstandet. In verständlicher Weise kann das Positionierelement 2 in vier möglichen Einbaupositionen bzw. Verdrehpositionen relativ zum jeweiligen korrespondierenden ersten Befestigungsabschnitt 81 angeordnet und festgelegt werden, wobei sich bei den drei gezeigten bevorzugten zweiten Eingriffsabschnitten 22 insgesamt zwölf mögliche Befestigungspositionen der Luftfedereinheit an der Führungslenkereinheit 4 ergeben. Diese entsprechende Anzahl lässt sich verdoppeln, indem das Positionierelement 2 auch quer zur Positionierebene E gedreht wird, also indem seine Unterseite nach oben gekehrt wird. Um die einzelnen Befestigungspositionen bzw. die Koordinaten der einzelnen zweiten Eingriffsabschnitte 22 genau zu bestimmen, ist es hilfreich, ein Koordinatensystem zu definieren, welches ortsfest am ersten Befestigungsabschnitt 81 vorgesehen ist, wobei dieser wiederum sowohl an der Führungslenkereinheit 4 als auch an der Luftfedereinheit 6 angeordnet sein kann. Es ergeben sich für jede der möglichen Verdrehpositionen des Positionierelements 2 für jeden der zweiten Eingriffsabschnitte 22 bestimmte Koordinatenpaare (x, y). Aufgrund der Vielzahl von möglichen Einbaupositionen ist es ratsam am Positionierelement 2 entsprechende Markierungen und Beschriftungen vorzusehen, damit bei der Montage der Luftfedereinheit 6 an eine Führungslenkereinheit 4 sowohl die korrekte Verdrehposition des Positionierelements 2 relativ zum ersten Befestigungsabschnitt 81 als auch die Verwendung des korrekten zweiten Eingriffsabschnitts 22 für den Monteur erkennbar ist.

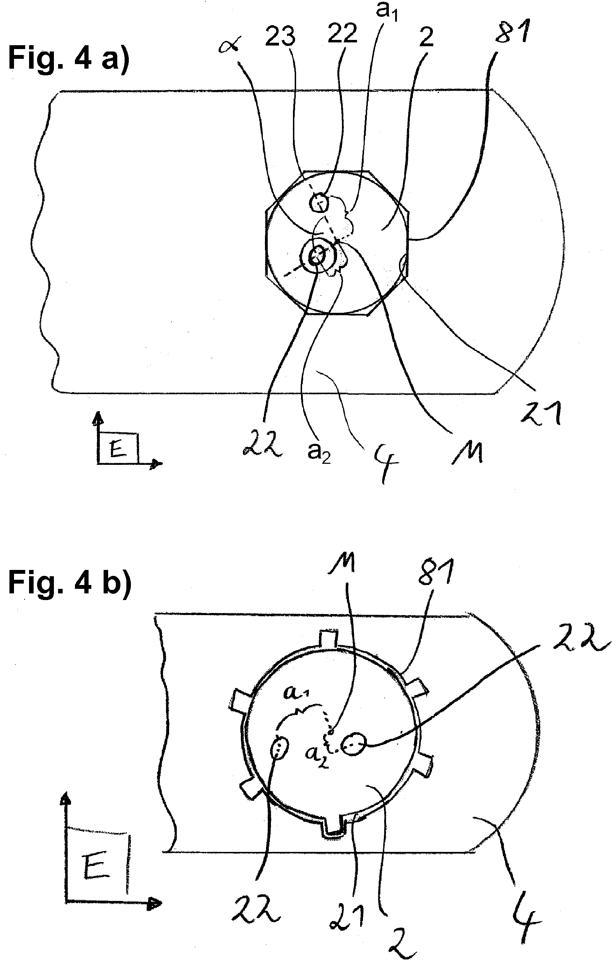

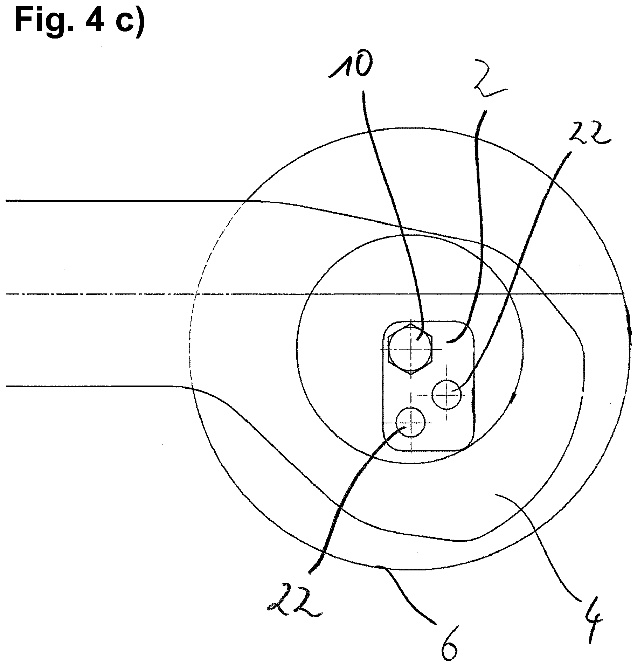

In den Fig. 4 a) - c) sind drei verschiedene Ausführungsformen des Positionierelements, insbesondere des ersten Eingriffsabschnitts 21 des Positionierelements 2, gezeigt. **Fig. 4 a)** zeigt einen achteckigen Querschnitt des ersten Eingriffsabschnitts 21, welcher mit einer bevorzugt ebenfalls achteckigen Geometrie des ersten Befestigungsabschnitts 81 korrespondiert. Weiterhin ist gezeigt, dass der erste Befestigungsabschnitt 81 an der Führungslenkereinheit 4 vorgesehen ist. Kennzeichnend hierbei ist, dass der Eingriffsabschnitt 21 eine gleichseitig polygonale Querschnittsgeometrie aufweist. Bevorzugt können der erste Eingriffsabschnitt 21 und der im Wesentlichen korrespondierende erste Befestigungsabschnitt 81 gleichseitig dreieckig, fünfeckig, bzw. sechs- oder siebeneckig ausgebildet sein. Eine höhere Anzahl von Ecken ist möglich, wobei jedoch bei zu vielen Ecken, bzw. zu kurzen Kanten und einer zu geringen Abweichung vom Kreis, der Verdrehschutz des ersten Eingriffsabschnitts 21 relativ zum ersten Befestigungsabschnitt 81 nicht mehr ausreichend ist. Eine hohe Eckenzahl bei hohem Verdrehschutz kann beispielsweise mittels einer sternförmigen Querschnittsgeometrie des ersten Eingriffsabschnitts 21 erreicht werden. Die Anzahl der Ecken ist bei gleichseitiger Auslegung gleichzusetzen mit der Anzahl der möglichen Verdrehpositionen des ersten Eingriffsabschnitts 21 relativ zum ersten Befestigungsabschnitt 81 in der Positionierebene E. Das Positionierelement 2 weist zwei zweite Eingriffsabschnitte 22 auf, wobei diese mit verschiedenen Abständen a₁, a₂ vom Flächenschwerpunkt M, welcher im vorliegenden Fall gleich dem Mittelpunkt des Innenkreises 23 des Achtecks ist, entfernt und mit einem Winkel α zueinander angeordnet sind. Die zweiten Eingriffsabschnitte 22 weisen darüber hinaus unterschiedliche Durchmesser auf, was insbesondere dazu dient, verschieden große Eingriffsmittel 10 aufzunehmen, um verschieden große Luftfedereinheiten 6 mit verschieden großen zweiten Befestigungsabschnitten 82 an der Führungslenkereinheit 4 festlegen zu können.

**Fig. 4 b)** zeigt eine bevorzugte Ausführungsform, in der der erste Eingriffsabschnitt 21 im Wesentlichen kreisförmig ist und nur an seiner Außenseite einen Vorsprung aufweist. Der mit dem ersten Eingriffsabschnitt 21 größtenteils korrespondierende erste Befestigungsabschnitt 81 ist ebenfalls im Wesentlichen kreisförmig ausgebildet und weist eine Vielzahl von über den Umfang verteilten Rücksprüngen auf, wobei der Vorsprung am ersten Eingriffsabschnitt 21 in einen dieser Rücksprünge eingreift. Das Positionierelement 2 kann im gezeigten Beispiel in sechs Verdrehpositionen relativ zu der Führungslenkereinheit 4 bzw. relativ zum ersten Befestigungsabschnitt 81 angeordnet werden, wobei sich bei den gezeigten zwei zweiten Eingriffsabschnitten 22 insgesamt zwölf mögliche Einbaupositionen einer Luftfeder relativ zum gezeigten Führungslenker 4 ergeben. Vorteilhafterweise kann der erste Eingriffsabschnitt 21 eine Vielzahl an Vorsprüngen aufweisen, wobei diese vorteilhafterweise mit gleichmäßig über den Umfang des erstens Eingriffsabschnitts 21 verteilt sind und in ebenfalls gleichmäßig über den ersten Befestigungsabschnitt 81 verteilten Rücksprüngen eingreifen. Es versteht sich weiterhin, dass der erste Eingriffsabschnitt 21 bevorzugt auch Rücksprünge aufweisen kann, in denen korrespondierende Vorsprünge des ersten Befestigungsabschnitts 81 eingreifen. **Fig. 4 c)** zeigt eine bevorzugt rechteckig ausgebildete Ausführungsform des ersten Eingriffsabschnitts 21 des Positionierelements 2, wobei bevorzugt drei zweite Eingriffsabschnitte 22 vorgesehen sind. Ein Eingriffsmittel 10 greift an dem obersten der drei Eingriffsabschnitte 22 ein um die Luftfedereinheit 6 an der Führungslenkereinheit 4 festzulegen.

Sofern zumindest zwei zweite Eingriffsabschnitte 22 am Positionierelement 4 vorgesehen sind, kann bevorzugt ein erster zweiter Eingriffsabschnitt 22 mittig am Positionierelement angeordnet sein und alle weiteren zweiten Eingriffsabschnitte, wie bisher beschrieben, außermittig am Positionierelement 4 angeordnet sein.

### Bezugszeichenliste:

- 2: Positionierelement
- 4: Führungslenkereinheit
- 6: Luftfedereinheit
- 10: Befestigungsmittel
- 21: erster Eingriffsabschnitt
- 22: zweiter Eingriffsabschnitt
- 23: Innenkreis
- 81: erster Befestigungsabschnitt
- 82: zweiter Befestigungsabschnitt
- 83: Anschlagkragen
- E: Positionierebene
- M: Flächenschwerpunkt
- a_{1..n}: Abstand zum Flächenschwerpunkt
- α_{1..n}: Winkel
- x, y: Koordinaten

## Patentansprüche

1. Luftfederbefestigung insbesondere für Nutzfahrzeuge, umfassend,
ein Positionierelement (2), eine Führungslenkereinheit (4) und eine Luftfedereinheit (6),
wobei die Führungslenkereinheit (4) und die Luftfedereinheit (6) je einen Befestigungsabschnitt (81, 82) aufweisen,
wobei das Positionierelement (2) einen ersten Eingriffsabschnitt (21) aufweist, welcher mit einem ersten Befestigungsabschnitt (81) in Eingriff bringbar ist, um das Positionierelement (2) gegen Verlagerung in einer Positionierebene (E) relativ zum ersten Befestigungsabschnitt (81) zu sichern,
wobei das Positionierelement (2) zumindest einen zweiten Eingriffsabschnitt (22) aufweist, welcher sich quer zur Positionierebene (E) erstreckt und außermittig bezogen auf die Positionierebene (E) am Positionierelement (2) angeordnet ist,
wobei ein zweiter Befestigungsabschnitt (82) quer zur Positionierebene (E) fluchtend mit dem zweiten Eingriffsabschnitt (22) durch zumindest ein Befestigungsmittel (10) festlegbar ist, um durch Festlegung des Positionierelements (2) in einer bestimmten Verdrehposition relativ zum ersten Befestigungsabschnitt (81) den zweiten Befestigungsabschnitt (82) in einer bestimmten Einbauposition bezogen auf den ersten Befestigungsabschnitt (81) festzulegen, **dadurch gekennzeichnet, dass** der erste Befestigungsabschnitt (81) einen Anschlagkragen (83) aufweist, gegen den das Positionierelement (2) über das Befestigungsmittel (10) pressbar ist, um die Luftfedereinheit (6) kraftschlüssig an der Führungslenkereinheit (4) festzulegen.

2. Luftfederbefestigung nach Anspruch 1,
wobei der erste Eingriffsabschnitt (21) des Positionierelements (2) in dem Bereich des Positionierelements (2) angeordnet ist, welcher eine größere Erstreckung längs der Positionierebene (E) aufweist als der Bereich, in welchem der zweite Eingriffsabschnitt (22) angeordnet ist.

3. Luftfederbefestigung nach einem der vorhergehenden Ansprüche,
wobei der zweite Eingriffsabschnitt (22) um einen Abstand (a) von einem gedachten Flächenschwerpunkt (M) der Erstreckung des Positionierelements (2) in der Positionierebene (E) beabstandet angeordnet ist.

4. Luftfederbefestigung nach einem der Ansprüche 1 bis 3,
wobei der erste Eingriffsabschnitt (21) sich im Wesentlichen kreisförmig in der Positionierebene (E) erstreckt und zumindest einen Vorsprung entlang der Positionierebene (E) aufweist, welcher mit einem korrespondierenden Rücksprung an dem sich im Wesentlichen kreisförmig in der Positionierebene (E) erstreckenden ersten Befestigungsabschnitt (81) in Eingriff bringbar ist.

5. Luftfederbefestigung nach einem der vorhergehenden Ansprüche,
wobei der zweite Eingriffsabschnitt (22) eine Aussparung ist, in welche der zweite Befestigungsabschnitt (82) oder ein Eingriffsmittel (10) eingreift.

6. Luftfederbefestigung nach einem der vorhergehenden Ansprüche,
wobei das Positionierelement (2) in sowohl in der Positionierebene (E) als auch quer zur Positionierebene (E) verdrehter Einbaulage am ersten Befestigungsabschnitt (81) festlegbar ist.

7. Luftfederbefestigung nach einem der Ansprüche 1 bis 4 oder 6,
wobei der zweite Eingriffsabschnitt (22) ein einstückig mit dem Positionierelement (2) ausgebildeter Gewindebolzen ist.

8. Luftfederbefestigung nach einem der vorhergehenden Ansprüche,
wobei der erste Befestigungsabschnitt (81) eine Aussparung quer zur Positionierebene (E) an der Luftfedereinheit (6) ist, und
wobei der zweite Befestigungsabschnitt (82) an der Führungslenkereinheit (4) vorgesehen ist.

## Claims

1. An air spring fastening, in particular for commercial vehicles, comprising
a positioning element (2), a radius arm unit (4), and an air spring unit (6),
wherein the radius arm unit (4) and the air spring unit (6) each have a fastening section (81, 82),
wherein the positioning element (2) has a first engagement section (21) that can be brought into engagement with a first fastening section (81) in order to secure the positioning element (2) against displacement in a positioning plane (E) relative to the first fastening section (81),
wherein the positioning element (2) has at least one second engagement section (22) that runs or extends transversely to the positioning plane (E) and is arranged eccentrically in relation to the positioning plane (E) on the positioning element (2),
wherein a second fastening section (82) can be fixed transversely to the positioning plane (E) in alignment with the second engagement section (22) by means of at least one fastening means (10) in order to fix the second fastening section (82) in a certain installation position in relation to the first fastening section (81) by fixing the positioning element (2) in a certain rotation position relative to the first fastening section (81), **characterized in that**
the first fastening section (81) comprises a retention collar (83), against which the positioning element (2) may be pushed or pressed or urged via the fastening means (10) so as to force-fittingly or frictionally fix the air spring unit (6) to the radius arm unit (4).

2. The air spring fastening of claim 1,
wherein the first engagement section (21) of the positioning element (2) is arranged in that portion of the positioning element (2), which has a larger extension along the positioning plane (E) than the portion, in which the second engagement section (22) is arranged.

3. The air spring fastening of any one of the preceding claims, wherein the second engagement section (22) is arranged spaced apart by a distance (a) from an imaginary centroid (M) of the extension of the positioning element (2) in the positioning plane (E).

4. The air spring fastening according to any one of claims 1 to 3,
wherein the first engagement section (21) extends essentially circularly in the positioning plane (E) and comprises at least one projection along the positioning plane (E), which may be made to engage a corresponding recess on the first fastening section (81) extending essentially circularly in the positioning plane (E).

5. The air spring fastening of any one of the preceding claims,
wherein the second engagement section (22) is a cavity, which is engaged by the second engagement section (82) or by an engagement means (10).

6. The air spring fastening of any one of the preceding claims,
wherein the positioning element (2) may be fixed to the first fastening section (81) in a rotated installation position both in the positioning plane (E) and transverse to the positioning plane (E).

7. The air spring fastening of any one of claims 1 to 4 or 6,
wherein the second engagement section (22) is a threaded pin, which forms an integral part of the positioning element (2).

8. The air spring fastening of any one of the preceding claims,
wherein the first fastening section (81) is a cavity transverse to the positioning plane (E) on the air spring unit (6), and
wherein the second fastening section (82) is provided on the radius arm unit (4).

## Revendications

1. Fixation de ressort pneumatique en particulier pour des véhicules utilitaires, comportant
un élément de positionnement (2), un ensemble formant bras oscillant de guidage (4) et un ensemble de ressort pneumatique (6),
dans laquelle
l'ensemble formant bras oscillant de guidage (4) et l'ensemble de ressort pneumatique (6) présentent chacun une portion de fixation (81, 82),
l'élément de positionnement (2) présente une première portion d'engagement (21) qui peut être amenée en engagement avec une première portion de fixation (81) afin de bloquer l'élément de positionnement (2) à l'encontre d'un déplacement dans un plan de positionnement (E) par rapport à la première portion de fixation (81),
l'élément de positionnement (2) présente au moins une seconde portion d'engagement (22) qui s'étend transversalement au plan de positionnement (E) et qui est disposée sur l'élément de positionnement (2) de façon excentrée par rapport au plan de positionnement (E),
une seconde portion de fixation (82) peut être immobilisée en alignement avec la seconde portion d'engagement (22) transversalement au plan de positionnement (E) par au moins un moyen de fixation (10) afin d'immobiliser la seconde portion de fixation (82) dans une position de montage déterminée par rapport à la première portion de fixation (81) par immobilisation de l'élément de positionnement (2) dans une position de rotation déterminée par rapport à la première portion de fixation (81),
**caractérisée en ce que**
la première portion de fixation (81) présente une collerette de butée (83) contre laquelle l'élément de positionnement (2) peut être pressé par le moyen de fixation (10) afin d'immobiliser l'ensemble de ressort pneumatique (6) par coopération de force sur l'ensemble formant bras oscillant de guidage (4).

2. Fixation de ressort pneumatique selon la revendication 1,
dans laquelle
la première portion d'engagement (21) de l'élément de positionnement (2) est disposée dans la zone de l'élément de positionnement (2) qui présente une plus grande extension le long du plan de positionnement (E) que la zone dans laquelle est disposée la seconde portion d'engagement (22).

3. Fixation de ressort pneumatique selon l'une des revendications précédentes,
dans laquelle
la seconde portion d'engagement (22) est disposée à une distance (a) du centre de gravité imaginaire (M) de l'extension de l'élément de positionnement (2) dans le plan de positionnement (E).

4. Fixation de ressort pneumatique selon l'une des revendications 1 à 3,
dans laquelle
la première portion d'engagement (21) s'étend sensiblement en forme de cercle dans le plan de positionnement (E) et présente au moins une saillie le long du plan de positionnement (E) qui peut être amenée en engagement avec un retrait correspondant sur la première portion de fixation (81) s'étendant sensiblement en forme de cercle dans le plan de positionnement (E).

5. Fixation de ressort pneumatique selon l'une des revendications précédentes,
dans laquelle
la seconde portion d'engagement (22) est une échancrure dans laquelle s'engage la seconde portion de fixation (82) ou un moyen d'engagement (10).

6. Fixation de ressort pneumatique selon l'une des revendications précédentes,
dans laquelle
l'élément de positionnement (2) peut être immobilisé sur la première portion de fixation (81) dans la position de montage aussi bien tournée dans le plan de positionnement (E) que tournée transversalement au plan de positionnement (E).

7. Fixation de ressort pneumatique selon l'une des revendications 1 à 4 ou 6,
dans laquelle
la seconde portion d'engagement (22) est un boulon fileté réalisé d'un seul tenant avec l'élément de positionnement (2).

8. Fixation de ressort pneumatique selon l'une des revendications précédentes,
dans laquelle
la première portion de fixation (81) est une échancrure transversale au plan de positionnement (E) sur l'ensemble de ressort pneumatique (6), et
la seconde portion de fixation (82) est prévue sur l'ensemble formant bras oscillant de guidage (4).
